(19) Europäisches Patentamt / European Patent Office / Office européen des brevets

(11) **EP 3 371 567 B1**

(12) **EUROPÄISCHE PATENTSCHRIFT**

(45) Veröffentlichungstag und Bekanntmachung des Hinweises auf die Patenterteilung:
**21.07.2021 Patentblatt 2021/29**

(21) Anmeldenummer: **16795255.5**

(22) Anmeldetag: **02.11.2016**

(51) Int Cl.:
*G01L 1/12* (2006.01)    *G01L 3/10* (2006.01)

(86) Internationale Anmeldenummer:
**PCT/EP2016/076380**

(87) Internationale Veröffentlichungsnummer:
**WO 2017/076876 (11.05.2017 Gazette 2017/19)**

(54) **VORRICHTUNG UND VERFAHREN ZUR BERÜHRUNGSLOSEN ERFASSUNG VON DREHMOMENTEN, TORSIONSEIGENFREQUENZEN UND/ODER TORSIONSPENDELUNGEN EINER WELLE**

DEVICE AND NON CONTACT METHOD FOR SENSING TORQUES, TORSIONAL NATURAL FREQUENCIES, AND/OR TORSIONAL OSCILLATIONS OF A SHAFT

DISPOSITIF ET PROCÉDÉ DE DÉTECTION SANS CONTACT DE COUPLES, DE FRÉQUENCES PROPRES DE TORSION ET/OU D'OSCILLATIONS DE TORSION D'UN ARBRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.11.2015 EP 15192697**

(43) Veröffentlichungstag der Anmeldung:
**12.09.2018 Patentblatt 2018/37**

(73) Patentinhaber: **BASF SE**
**67056 Ludwigshafen am Rhein (DE)**

(72) Erfinder:
• **STEPHAN, Oskar**
  **68766 Hockenheim (DE)**
• **SCHUHMANN, Roland**
  **64625 Bensheim (DE)**
• **CATTERNAN, Tom**
  **2018Z Antwerpen 1 (BE)**

(56) Entgegenhaltungen:
EP-A2- 2 202 499    EP-A2- 2 549 255
WO-A1-2015/032638    WO-A1-2015/132123
US-A- 4 566 338    US-A1- 2014 102 220
US-A1- 2014 184 210

**Beschreibung**

Die Erfindung bezieht sich auf einen induktiven Sensor, der zur berührungslosen Messung von Drehmomenten, Torsionseigenfrequenzen und Torsionspendelungen geeignet ist. Ferner bezieht sich die Erfindung auf ein Verfahren zur berührungslosen Erfassung von Drehmomenten, Torsionseigenfrequenzen und Torsionspendelungen an Wellen, seien es Hohlwellen oder seien es Wellen aus Vollmaterial, die entweder aus ferromagnetischem Material gefertigt sind oder ein ferromagnetische Eigenschaften aufweisendes Material enthalten.

Zur berührungslosen Drehmomenterfassung kann insbesondere bei ferromagnetischen Materialien der anisotrope magnetostriktive Effekt ausgenutzt werden. Dabei wird ausgenutzt, dass bei diesen Materialien die Permeabilität in Zug- und Druckrichtung - zum Beispiel bei einer Torsionsbeanspruchung - unterschiedlich ist. Mittels eines berührungslosen Sensors können diese Differenzen gemessen werden, die innerhalb eines weiten Messbereiches proportional zur Oberflächenspannung bzw. zum die Welle beanspruchenden Drehmoment verlaufen.

EP 2 202 499 A2 bezieht sich auf eine Drehmomentsensoreinrichtung. Die Sensoreinrichtung misst ein Drehmoment eines eine Längserstreckung aufweisenden Objektes. Die Sensoreinrichtung umfasst eine erste Spule, einen ersten Widerstand, eine Energiequelle und eine Bewertungseinheit. Die erste Spule umfasst einen ersten Spulenanschluss und eine zweiten Spulenanschluss. Der erste Widerstand umfasst ein erstes Widerstandsterminal und ein zweites Widerstandsterminal. Die Energiequelle umfasst ein erstes Terminal und ein zweites Terminal, ferner umfasst die Bewertungseinheit einen ersten Anschluss und einen zweiten Anschluss. Über die Bewertungseinheit kann die absorbierte Energie am ersten Widerstand ermittelt werden, die abhängig vom Drehmoment ist, welches auf das eine Längserstreckung aufweisende Objekt wirkt.

Der Erfindung liegt die Aufgabe zugrunde, eine Vorrichtung bereitzustellen, mit welcher das Drehmoment erfasst werden kann, welches beispielsweise in Knetern, Rührern, Schaufeltrocknern und dergleichen mehr an einer Welle anliegt und diese demzufolge mechanisch beansprucht werden kann.

Erfindungsgemäß wird eine Vorrichtung zur berührungslosen Erfassung von Drehmomenten, von Torsionseigenfrequenzen und von Torsionspendelungen an einer Welle vorgeschlagen, wobei die Welle aus einem ferromagnetische Eigenschaften aufweisenden Material gefertigt ist oder ein ebensolches Material enthält. Ein einem Wellenmantel dieser Welle zuweisender Messkopf umfasst eine Erregerspule, die ein magnetisches Feld in die Welle einkoppelt, wobei der Messkopf des Weiteren eine Anzahl von Messspulen aufweist, die ein die Welle über den Wellenmantel verlassendes magnetische Feld messen.

Neben dem Vorteil einer berührungslosen Messung bietet die erfindungsgemäße Lösung den weiteren Vorteil, dass durch eine derartige Vorrichtung ein Messsignal erhalten wird, das in einem verhältnismäßig großen Messbereich zu den Oberflächenspannungen des Wellenmaterials sowie zu dem Drehmoment der Welle proportional ist. Die Frequenz und die Stärke des magnetischen Feldes sind so gewählt, dass das erhaltene Messsignal linear über einen großen Frequenzbereich verläuft und die magnetische Sättigung für die meisten bekannten ferromagnetischen Materialien gerade nicht erreicht wird. Die Frequenz liegt in der Größenordnung von 80 KHz bis 120 KHz, beispielsweise bei 100 KHz.

Erfindungsgemäß sind sowohl die Erregerspule als auch die am Umfang des Messkopfs angeordneten Messspulen in ein Kunststoffmaterial, beispielsweise PEEK eingebettet. Der Messkopf hat ein zylindrisches Aussehen und einen Durchmesser von etwa 20 mm.

Die Erfindung betrifft darüber hinaus auch ein Verfahren zur berührungslosen Erfassung von Drehmomenten einer Welle und/oder von Torsionseigenfrequenzen und/oder von Torsionspendelungen mit einer erfindungsgemäßen Vorrichtung, wobei eine Erregerspule der Vorrichtung ein magnetisches Feld in die Welle einkoppelt und eine Anzahl von Messspulen ein die Welle verlassendes magnetisches Feld misst, und eine Summe aller an den Messspulen anliegenden Spannungen gemessen wird.

Eine Richtung eines erfassten Drehmomentes kann aus dem Vorzeichen der Spannungsdifferenzen zwischen den einzelnen Messspulen der Anzahl von Messspulen bestimmt werden. Durch das erfindungsgemäß vorgeschlagene Verfahren werden zum Drehmoment, das auf die Welle wirkt, proportionale Oberflächenspannungen im Wellenmantel der Welle gemessen. Damit kann eine Drehmomenterfassung bei Wellen vorgenommen werden, die bevorzugt einen Durchmesser von mindestens 35 mm aufweisen.

Nach dem erfindungsgemäß vorgeschlagenen Verfahren wird insbesondere ein Magnetfeld hinsichtlich Frequenz und Magnetfeldstärke in die Welle eingekoppelt, welches einen Frequenzbereich zwischen 80 KHz und 100 KHz einschließt, innerhalb dessen ein lineares Messsignal generiert werden kann, so zum Beispiel 100 KHz.

Als Ausgangssignal liefert die erfindungsgemäß vorgeschlagene Vorrichtung einen elektrischen Strom in der Größenordnung zwischen 4 mA und 20 mA, der in Drehmomentwerte umgerechnet wird. Die Versorgungsspannung der Erregerspule der Vorrichtung zur berührungslosen Erfassung von Drehmomenten, Torsionseigenfrequenzen und Torsionspendelungen liegt vorzugsweise bei 24 V.

Bei der Kalibrierung der Vorrichtung wird mittels der erfindungsgemäß vorgeschlagenen Vorrichtung eine berührungslose Erfassung von Drehmomenten durchgeführt. Dazu wird die Vorrichtung und auch die zugehörige Software für eine jede Welle individuell kalibriert, wofür stationäre Messungen in zwei bekannten Lastpunkten durchgeführt werden.

Die Qualität der Kalibrierung beeinflusst signifikant die Qualität der erhaltenen Messung. Ohne Durchführung einer derartigen Kalibrierung kann die erfindungsgemäß vorgeschlagene Vorrichtung zur Ermittlung von Torsionseigenfrequenzen und besagter Torsionspendelungen eingesetzt werden.

Mit der erfindungsgemäß vorgeschlagenen Vorrichtung werden die zum individuellen Drehmoment proportionalen Oberflächenspannungen ferromagnetischer Antriebswellen - um ein Beispiel zu nennen - gemessen. Das resultierende Messsignal der Vorrichtung wird von den magnetischen Eigenschaften des eingesetzten Wellenmaterials sowie von der Größenordnung der Magnetostriktion oder vorhandenen Materialinhomogenitäten beeinflusst. Selbst bei großen Materialinhomogenitäten können bei Belastungen, die zu einer Oberflächenspannung größer als 10 Newton/mm$^2$ führen, bei sorgfältiger Kalibrierung gute Messergebnisse erhalten werden.

Anhand der Zeichnung wird die Erfindung nachstehend eingehender beschrieben.

Es zeigt:

Figur 1          Positionierung der Vorrichtung,

Figur 2          eine Positionierung der Spulen am Messkopf,

Figur 3          den elektrischen Anschluss der Vorrichtung,

Figur 4          die Rückseite der Vorrichtung und Einstellelemente,

Figuren 5 - 7    eine Kalibrierung der Vorrichtung,

Figuren 8 und 9  einen ersten Sensorhalter und

Figur 10         die Ausführungsmöglichkeit eines zweiten Sensorhalters.

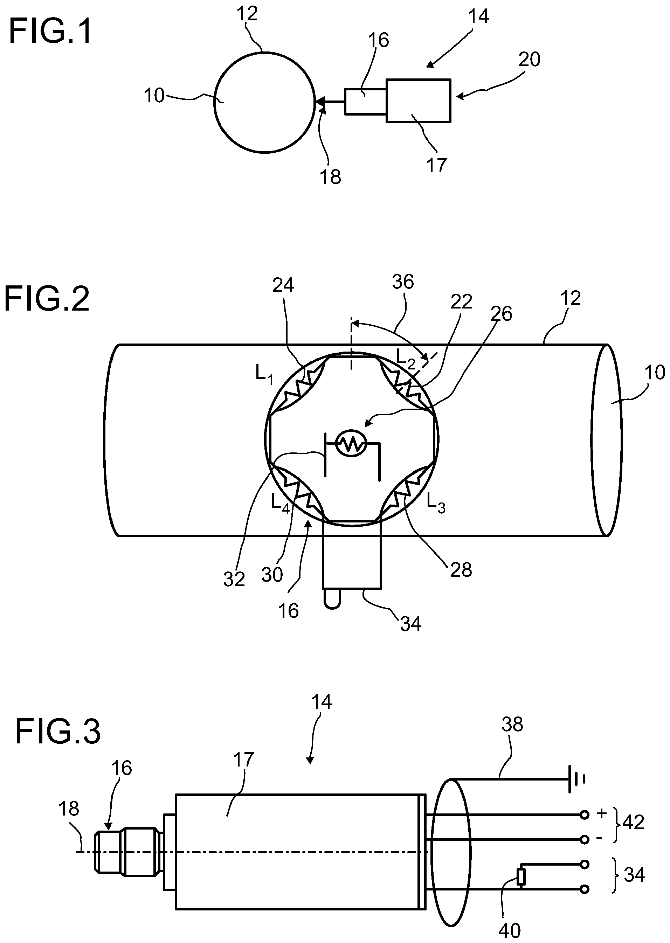

Der Darstellung gemäß Figur 1 ist die Positionierung der erfindungsgemäß vorgeschlagenen Vorrichtung, insbesondere in Gestalt eines Sensors zu entnehmen.

Eine Welle 10, die als Welle aus Vollmaterial oder auch Hohlwelle gefertigt ist, weist einen Wellenmantel 12 auf. Diesem in horizontaler Ausrichtung 18 gegenüberliegend befindet sich die erfindungsgemäß vorgeschlagene Vorrichtung 14, vorzugsweise ausgeführt als ein Sensor. Der Sensor 14 liegt bezüglich seiner Längsachse in einer Ebene, welche durch die Längsachse eines Gehäuses 17 des Sensors 14 und der Längsachse der Welle 10 senkrecht zur Zeichenebene aufgespannt wird. In der Darstellung gemäß Figur 1 ist eine bevorzugte Montageposition 20 des Sensors 14 dargestellt. Am Gehäuse 17 des Sensors 14 befindet sich am vorderen Ende ein Messkopf 16, welcher in einem Abstand - auf den nachfolgend noch näher eingegangen werden wird - zum Wellenmantel 12 der Welle 10 positioniert ist.

Figur 2 zeigt die Position von Spulen am Messkopf des Sensors gemäß der schematischen Darstellung nach Figur 1.

Aus Figur 2 geht hervor, dass sich am Messkopf 16 etwa im Zentrum desselben eine Erregerspule 22 befindet. Die Erregerspule 22 wird mit einer Anregungsfrequenz zwischen 50 kHz und 150 kHz, bevorzugt zwischen 75 kHz und 125 kHz und besonders bevorzugt in der Größenordnung von 100 kHz angeregt. Dies ermöglicht, schnelle dynamische Änderungen des Drehmomentes - unabhängig von der Rotationsfrequenz der Welle 10 - zu erfassen. Das durch die Erregerspule 22 in die Welle 10 eingekoppelte Magnetfeld ist so gewählt, dass ein Messsignal linear über einen großen Frequenzbereich ist und die magnetische Sättigung für die meisten bekannten ferromagnetische Eigenschaften aufweisende Materialien unterschritten bleibt, insbesondere liegt der Frequenzbereich zwischen 80 KHz und 120 KHz, beispielsweise kann eine Frequenz von 100 KHz gewählt werden.

Die Erregerspule wird gemäß der Darstellung in Figur 2 mit einer Eingangsspannung 32 $U_{in}$, die in der Größenordnung von 24 V liegt, beaufschlagt. Um Umfang des Messkopfes 16, der erfindungsgemäß aus einem Kunststoffmaterial, wie beispielsweise PEEK, gefertigt wird, befindet sich eine Anzahl von Messspulen 24, 26, 28, 30. Die Messspulen 24, 26, 28, 30 liefern eine Ausgangsspannung 34 $U_{aus}$ (vgl. Darstellung gemäß Figur 3). Aus der Darstellung gemäß Figur 2 ergibt sich, dass die Messspulen - in diesem Ausführungsbeispiel vier an der Zahl - symmetrisch zueinander angeordnet sind. In Figur 2 sind die Messspulen 24, 26, 28, 30 jeweils in einer Winkelorientierung 36 von 45° zueinander bezogen auf die Hauptachsen der Welle 10 positioniert. Bevorzugt befindet sich der Messkopf 16 gemäß der Darstellung in Figur 1 und die an diesem aufgenommenen Spulen, d.h. die Erregerspule 22 sowie die Anzahl von Messspulen 24, 26, 28, 30 in einem identischen Abstand zum Wellenmantel 12 der Welle 10, sei es eine Welle 10 aus Vollmaterial oder sei es eine Welle, die als Hohlwelle ausgebildet ist.

Unter Berücksichtigung der Größe des Messkopfes 16 sowie der Anzahl symmetrisch an diesem unterzubringender Messspulen 24, 26, 28, 30 ergibt sich ein minimal geforderter Durchmesser der Welle 10 von ca. 35 mm. Aufgrund der Anordnung der Messspulen 24, 26, 28, 30, deren elektrischer Verschaltung und der Positionierung des Messkopfes 16 in Bezug auf den Wellenmantel 12 der Welle 10 werden vom Sensor 14 nur die zum Drehmoment proportionalen Oberflächenspannungen im Wellenmantel 12 der Welle 10 erfasst. Figur 3 zeigt den elektrischen Anschluss des Sensors.

Figur 3 ist zu entnehmen, dass in der horizontalen Ausrichtung 18 des Sensors 14 der Messkopf 16 - wie in Figur 1 dargestellt - dem Wellenmantel 12 der Welle 10 direkt gegenüberliegt. Das Gehäuse 17 des Sensors 14 verfügt über eine Masseverbindung 38, ferner Anschlüsse für die Versorgungsspannung 42 $U_{DC}$ sowie für Ausgangsleitungen, an welchen die jeweils gemessene Ausgangsspannung 34 des Ensembles von Messspulen 24, 26, 28, 30 abgegriffen werden kann. Hier ist ein Shunt-Widerstand 40 vorgesehen, der einen Widerstandswert R in der Größenordnung von 500 Ω aufweist. Bevorzugt ist das Anschlusskabel für die Versorgungsspannung 42 so zu dimensionieren, dass ein Spannungsabfall für die Versorgungsspannung 42 des Sensors 14 nicht mehr als 2 % beträgt.

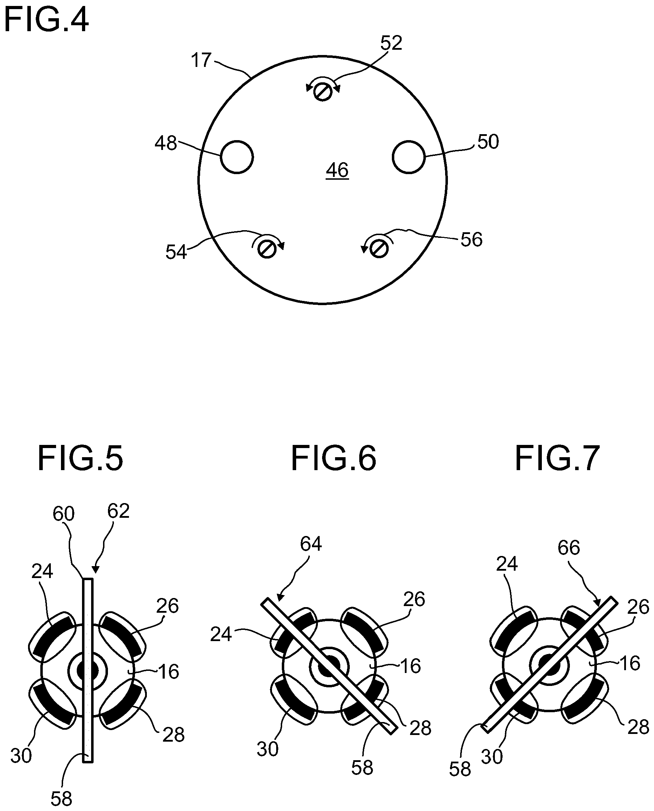

Figur 4 zeigt die Rückseite des Sensors.

Mit Position 46 ist eine Rückseite des Sensorgehäuses 17 bezeichnet. Die Rückseite 46 des Sensorgehäuses 17 verfügt über eine Buchse 48 und einen Kabeleingang 50. An einer Nullpunkteinstellung 52 kann eine Kalibrierung des Sensors 14 vorgenommen werden. An einer Stellvorrichtung 54 kann die Einstellung eines Vergrößerungsfaktors bzw. eines Verkleinerungsfaktors vorgenommen werden, wobei folgende Stufen zur Verfügung stehen können: 0,312 / 0,625 / 1,25 / 2,5 / 5 und 10. An einer Frequenzeinstellung 56 kann eine Frequenzeinstellung vorgenommen werden, ausgehend von 1 Hz bis 5Hz, 10 Hz, 50 Hz, 100 Hz und 200 Hz.

Der Figurensequenz der Figuren 5, 6 und 7 ist eine Möglichkeit zur Bestimmung der Messsegmente zu entnehmen.

Aus der Darstellung gemäß der Figuren 5, 6 und 7 geht hervor, dass durch Einsatz eines Bleches 58, welches eine Dicke 60 aufweist, die Lage der Messspulen 24, 26, 28, 30 ermittelt werden kann. Die Blechdicke 60 des Bleches 58 liegt bevorzugt in der Größenordnung von 2 mm. Die Einstellung des Nullpunktes des Sensors 14 erfolgt auf beispielsweise 12 mA. Durch das Blech 58, welches vor dem Messkopf 16 des Sensors 14 zu positionieren ist, und dessen Drehung - vergleiche Position 6 mit einer 45°-Verdrehung 64 nach links oder vergleiche Figur 7 mit einer 45°-Verdrehung 66 nach rechts - ergibt sich jeweils ein Ausschlag. In der senkrechten Stellung des Bleches 58 gemäß Figur 5 ergibt sich kein Ausschlag, das bedeutet, man misst den Offsetstrom von beispielsweise 12 mA. Für die in Figur 6 dargestellte Position mit 45°-Verdrehung 64 nach links ergibt sich ein positiver Maximalwert, und bei der in Figur 7 dargestellten 45°-Verdrehung 66 des Bleches 58 nach rechts ergibt sich ein negativer Maximalwert. Durch die Bewegung des Bleches 58 kann die Funktion des Sensors getestet werden, ebenso die Richtung einer Stromänderung.

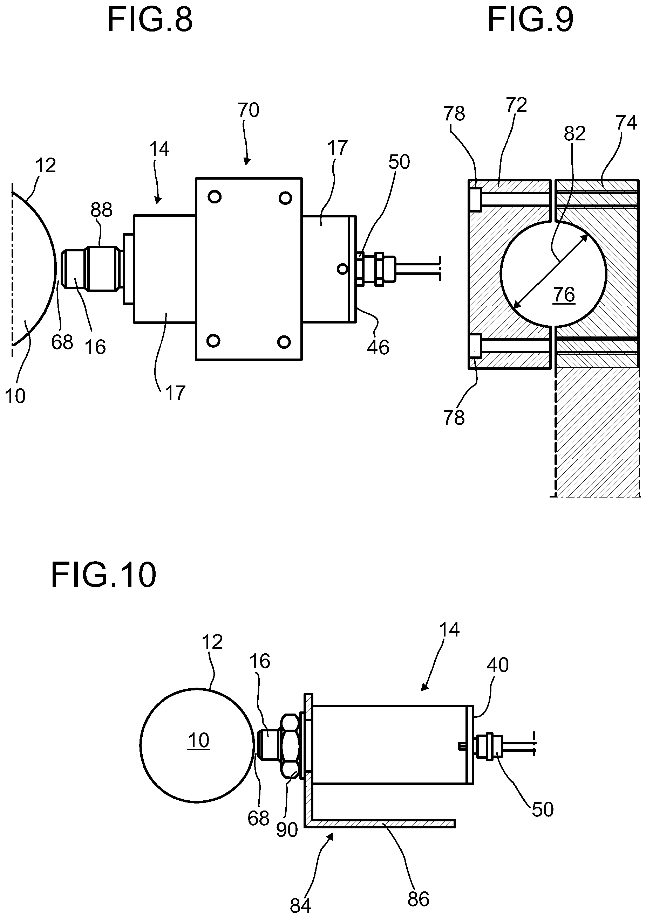

Die Figuren 8 und 9 zeigen einen ersten Sensorhalter für den Sensor.

Figur 8 zeigt, dass das Gehäuse 17 des Sensors 14 vom ersten Sensorhalter 70 umschlossen ist. Aus der Darstellung gemäß Figur 8 ist darüber hinaus zu entnehmen, dass sich der vom Gehäuse 17 des Sensors 14 weg erstreckende Messkopf 16 im Abstand 68 in Bezug auf den Wellenmantel 12 der Welle 10 befindet. Der Abstand 68 liegt vorzugsweise zwischen 0,5 mm und 1 mm, besonders bevorzugt bei 0,75 mm. An der Rückseite 46 des Gehäuses 17 befindet sich der bereits erwähnte Kabeleingang 50.

Figur 9 zeigt, dass der erste Sensorhalter 70 eine erste Halterhälfte 72 und eine zweite Halterhälfte 74 aufweist. Diese begrenzen im montierten Zustand eine Durchgangsöffnung 76, die in einem Öffnungsdurchmesser 82 ausgebildet sein kann. Eine der beiden Halterhälften 72, 74 umfasst Ansenkungen 78 für Klemmschrauben, mit welchen die Halterhälften 72, 74 das Gehäuse 17 des Sensors 14 umschließen.

Figur 10 zeigt einen zweiten Sensorhalter.

Aus der Darstellung gemäß Figur 10 ergibt sich, dass der zweite Sensorhalter 84 - ausgeführt als Winkelblech 86 - mittels einer Mutter 90, die auf ein Gewinde 88 aufgeschraubt wird, am Gehäuse 17 des Sensors 14 befestigt werden kann. Das Gewinde 88 - vergleiche auch Darstellung gemäß Figur 8 - befindet sich auf der Außenmantelfläche des Messkopfes 16 des Sensors 14. Durch die Mutter 70 wird ein Ende des Winkelbleches 86 gegen das Gehäuse 17 des Sensors 14 angestellt. Auch in der Darstellung gemäß Figur 10 ist gezeigt, dass sich die Stirnseite des Messkopfes 16 im Abstand 68 zum Wellenmantel 12 der Welle 10 befindet, die entweder aus ferromagnetischem Material gefertigt ist oder ein solches enthält. An der Rückseite 46 des Gehäuses 17 des Sensors 14 befindet sich der bereits erwähnte Kabeleingang 50.

Hinsichtlich der Kalibrierung des Sensors 14 ist zu bemerken, dass sich bestmögliche Messergebnisse dann einstellen, sobald der Sensor 14 seine Betriebstemperatur aufweist. Um Messwerte im gesamten zu erwartenden Spektrum zu erhalten, ist der Verstärkungsfaktor an der entsprechenden Einstellung 54 geeignet auszuwählen. Die Einstellung einer Filterfrequenz des Sensors 14 ergibt sich maßgeblich aus der Messaufgabe. Zur Einstellung der Eckfrequenz dient die Frequenzeinstellung 56, die sich - vergleiche Darstellung gemäß Figur 4 - an der Rückseite 46 des Sensors 14 befindet. Um Drehmomente berührungslos in beide Richtungen zu erfassen, sollte ein Offset möglichst in der Mitte des Messbereiches liegen (12 mA bzw. 6 V Eingangsspannung bei einem Widerstand 40 von 500 Ω). Vorzugsweise erfolgt die genaue Bestimmung des Offsets bei der Drehzahl im Leerlauf der Welle 10, um den Einfluss von sich in dieser befindenden Materialinhomogenitäten zu berücksichtigen. Der Sensor 14 liefert als Ausgangssignal stets einen Strom, der zwischen 4 mA und 20 mA liegt. Bei Verwendung eines Shunt-Widerstands 40 mit einem Widerstandswert von R = 500 Ω werden Ausgangsspannungen zwischen 2 V und 10 V erhalten. Zur Ermittlung der Drehmomente sind diese umzurechnen. Im Messbereich des Sensors 14 gilt die Beziehung: Moment = FAKT (Spannung minus Offset).

Zur Ermittlung des Umrechnungsfaktors FAKT und des Offsets sind zwei bekannte Messpunkte auszuwählen. Eine genaue Bestimmung des Offsets sollte bei Nenndrehzahl der Welle 10 erfolgen, um den Einfluss der Materialhomogenitäten genau zu berücksichtigen. Dies erfolgt am Besten bei Leerlauf der Welle 10. Falls dies nicht möglich ist, kann auch ein anderer Betriebspunkt mit niedriger Last und ein zweiter mit hoher Last gewählt werden. Die Berechnung des Offsets ergibt sich nach untenstehender Formel:

$$\text{Offset} = \frac{U_2 * M_1 - U_1 * M_2}{M_1 - M_2}$$

Darin ist $M_1$ die große Last mit der dazu gemessenen Sensorspannung $U_1$ und $M_2$ die kleine Last mit der Sensorspannung $M_2$. Zur Bestimmung des Verstärkungsfaktors des Sensors 14 wird ein Lastpunkt möglichst nahe bei Nennlast benötigt. Der Faktor FAKT ergibt sich dann zu:

$$\text{FAKT} = \frac{(M_1 - M_2)}{U_1 - U_2}$$

Bezugszeichenliste

| | | | |
|---|---|---|---|
| 10 | Welle | 90 | Mutter |
| 12 | Wellenmantel | | |
| 14 | Vorrichtung, Sensor | | |
| 16 | Messkopf | | |
| 17 | Gehäuse | | |
| 18 | horizontale Ausrichtung | | |
| 20 | Montageposition der Vorrichtung 14 | | |
| 22 | Erregerspule | | |
| 24 | erste Messspule $L_1$ | | |
| 26 | zweite Messspule $L_2$ | | |
| 28 | dritte Messspule $L_3$ | | |
| 30 | vierte Messspule $L_4$ | | |
| 32 | Eingangsspannung $U_{in}$ | | |
| 34 | Ausgangsspannung $U_{aus}$ | | |
| 36 | Winkelorientierung (45°) | | |
| 38 | Verbindung zu Masse | | |
| 40 | Shunt-Widerstand (R = 500 $\Omega$) | | |
| 42 | Versorgungsspannung $U_{DC}$ | | |
| 44 | Signalstrom 4 mA - 20 mA | | |
| 46 | Rückseite Sensorgehäuse | | |
| 48 | Buchse | | |
| 50 | Kabeleingang | | |
| 52 | Nullpunkteinstellung | | |
| 54 | Einstellung Vergrößerung/Verkleinerung | | |
| 56 | Frequenzeinstellung | | |
| 58 | Kali brierblech | | |
| 60 | Blechdicke d | | |
| 62 | 90°-Position | | |
| 64 | 45°-Verdrehung links | | |
| 66 | 45°-Verbindung rechts | | |
| 68 | Abstand | | |
| 70 | erster Sensorhalter | | |
| 72 | erste Sensorhalterhälfte | | |

(fortgesetzt)

| 74 | zweite Sensorhalterhälfte |
| 76 | Durchgangsöffnung |
| 78 | Ansenkung für Schraubenkopf |
| 80 | Halteröffnung |
| 82 | Öffnungsweite, Öffnungsdurchmesser |
| 84 | zweiter Sensorhalter |
| 86 | Winkelblech |
| 88 | Gewinde |

**Patentansprüche**

1. Vorrichtung (14) zur berührungslosen Erfassung eines Drehmomentes einer Welle (10) und/oder von Torsionseigenfrequenzen und/oder von Torsionspendelungen, wobei die Welle (10) ein ferromagnetisches Material enthält, wobei ein einem Wellenmantel (12) der Welle (10) zuweisender Messkopf (16) eine Erregerspule (22) aufweist, die ein magnetisches Feld in die Welle (10) einkoppelt, und der Messkopf (16) eine Anzahl von Messspulen (24, 26, 28, 30) enthält, die ein die Welle (10) verlassendes magnetisches Feld messen, **dadurch gekennzeichnet, dass** der Messkopf (16) aus einem Kunststoffmaterial, wie beispielsweise PEEK gefertigt ist und in einem Abstand (68) zum Wellenmantel (12) angeordnet ist, der zwischen 0,5 mm und 1 mm liegt und bevorzugt 0,75 mm beträgt, und die Messspulen (24, 26, 28, 30) symmetrisch zueinander und in einem Winkel von 45° bezogen auf die Hauptachsen der Welle (10) angeordnet sind.

2. Vorrichtung (14) gemäß Anspruch 1, **dadurch gekennzeichnet, dass** eine Anregungsfrequenz der Erregerspule (22) zwischen 50 kHz und 150 kHz, bevorzugt zwischen 75 kHz und 125 kHz und besonders bevorzugt in der Größenordnung von 100 kHz liegt.

3. Vorrichtung (14) gemäß einem der vorhergehenden Ansprüche, **dadurch gekennzeichnet, dass** ein Abstand (68) aller im Messkopf (16) aufgenommenen Messspulen (24, 26, 28, 30) in Bezug auf die Erregerspule (22) gleich ist.

4. Verfahren zur berührungslosen Erfassung von Drehmomenten einer Welle (10) und/oder von Torsionseigenfrequenzen und/oder von Torsionspendelungen mit einer Vorrichtung (14) gemäß einem der Ansprüche 1 bis 3, **dadurch gekennzeichnet, dass**

   a) eine Erregerspule (22) der Vorrichtung (14) ein magnetisches Feld in die Welle (10) einkoppelt,
   b) eine Anzahl von Messspulen (24, 26, 28, 30) ein die Welle (10) verlassendes magnetisches Feld misst,
   c) eine Summe aller an den Messspulen (24, 26, 28, 30) anliegenden Spannungen gemessen wird und
   d) dass die Vorrichtung (14) zur Erfassung von Drehmomenten und/oder Torsionseigenfrequenzen und/oder Torsionspendelungen durch stationäre Messungen an zwei bekannten Lastpunkten kalibriert wird und
   e) dass zu dem Drehmoment proportionale Oberflächenspannungen in einem Wellenmantel (12) der Welle (10) gemessen werden.

5. Verfahren gemäß Anspruch 4, **dadurch gekennzeichnet, dass** aus dem Vorzeichen der Spannungsdifferenzen zwischen der Anzahl von Messspulen (24, 26, 28, 30) die Richtung eines erfassten Drehmomentes bestimmt wird.

6. Verfahren gemäß Anspruch 4, **dadurch gekennzeichnet, dass** Frequenz und Stärke des von der Erregerspule (22) eingekoppelten magnetischen Feldes ein über einen Frequenzbereich von 80 KHz bis 120 KHz lineares Messsignal ermöglichen.

7. Verfahren gemäß einem der Ansprüche 4 bis 6, **dadurch gekennzeichnet, dass** als Messsignal ein elektrischer Strom zwischen 4 mA und 20 mA erzeugt wird.

8. Verfahren gemäß einem der Ansprüche 4 bis 7, **dadurch gekennzeichnet, dass** die Erregerspule (22) mit einer Versorgungsspannung von vorzugsweise 24 Volt betrieben wird.

**EP 3 371 567 B1**

Claims

1. An apparatus (14) for the non-contact sensing of a torque of a shaft (10) and/or of natural torsional frequencies and/or of torsional oscillations, the shaft (10) comprising a ferromagnetic material, wherein a measuring head (16) facing a shaft lateral surface (12) of the shaft (10) has an exciter coil (22) which couples a magnetic field into the shaft (10), and the measuring head (16) comprises a number of measuring coils (24, 26, 28, 30), which measure a magnetic field leaving the shaft (10), wherein the measuring head (16) is made of a plastic material such as PEEK, and is arranged at a distance (68) from the shaft lateral surface (12) which lies between 0.5 mm and 1 mm and is preferably 0.75 mm, and the measuring coils (24, 26, 28, 30) are arranged symmetrically in relation to one another and at angle of 45°, based on the main axes of the shaft (10).

2. The apparatus (14) according to claim 1, wherein an excitation frequency of the exciter coil (22) lies between 50 kHz and 150 kHz, preferably between 75 kHz and 125 kHz, and particularly preferably is of the order of magnitude of 100 kHz.

3. The apparatus (14) according to one of the preceding claims, wherein a distance (68) of all the measuring coils (24, 26, 28, 30) accommodated in the measuring head (16) in relation to the exciter coil (22) is the same.

4. A method for the non-contact sensing of torques of a shaft (10) and/or of natural torsional frequencies and/or of torsional oscillations with an apparatus (14) according to one of claims 1 to 3, wherein

   a) an exciter coil (22) of the apparatus (14) couples a magnetic field into the shaft (10),
   b) a number of measuring coils (24, 26, 28, 30) measure a magnetic field leaving the shaft (10), and
   c) a sum of all the voltages present on the measuring coils (24, 26, 28, 30) is measured, and
   d) wherein the apparatus (14) for sensing torques and/or natural torsional frequencies and/or torsional oscillations is calibrated by stationary measurements at two known load points, and
   e) wherein surface stresses in a shaft lateral surface (12) of the shaft (10) which are proportional to the torque are measured.

5. The method according to claim 4, wherein the direction of a sensed torque is determined from the sign of the voltage differences between the number of measuring coils (24, 26, 28, 30).

6. The method according to claim 4, wherein the frequency and strength of the magnetic field coupled in by the exciter coil (22) permit a linear measured signal over a frequency range from 80 kHz to 120 kHz.

7. The method according to one of claims 4 to 6, wherein the measured signal generated is an electric current between 4 mA and 20 mA.

8. The method according to one of claims 4 to 7, wherein the exciter coil (22) is operated with a supply voltage of preferably 24 volts.

Revendications

1. Dispositif (14) de détection sans contact d'un couple d'un arbre (10) et/ou de fréquences propres de torsion et/ou d'oscillations de torsion, l'arbre (10) contenant un matériau ferromagnétique, dans lequel une tête de mesure (16) pointant vers une enveloppe d'arbre (12) de l'arbre (10) présente une bobine d'excitation (22) qui induit un champ magnétique dans l'arbre (10), et la tête de mesure (16) contient un nombre de bobines de mesure (24, 26, 28, 30) qui mesurent un champ magnétique sortant de l'arbre (10), **caractérisé en ce que** la tête de mesure (16) est fabriquée à partir d'un matériau synthétique, tel que le PEEK, et est disposée à une distance (68) de l'enveloppe d'arbre (12) qui est comprise entre 0,5 mm et 1 mm, et est de préférence égale à 0,75 mm, et les bobines de mesure (24, 26, 28, 30) sont disposées de manière symétrique les unes par rapport aux autres et selon un angle de 45° par rapport aux axes principaux de l'arbre (10).

2. Dispositif (14) selon la revendication 1, **caractérisé en ce qu'**une fréquence d'excitation de la bobine d'excitation (22) est comprise entre 50 kHz et 150 kHz, de préférence entre 75 kHz et 125 kHz, et de manière particulièrement préférée de l'ordre de 100 kHz.

**3.** Dispositif (14) selon l'une quelconque des revendications précédentes, **caractérisé en ce qu'**une distance (68) de toutes les bobines de mesure (24, 26, 28, 30) logées dans la tête de mesure (16) par rapport à la bobine d'excitation (22) est la même.

**4.** Procédé de détection sans contact de couples d'un arbre (10) et/ou de fréquences propres de torsion et/ou d'oscillations de torsion par un dispositif (14) selon l'une quelconque des revendications 1 à 3, **caractérisé en ce que**

a) une bobine d'excitation (22) du dispositif (14) induit un champ magnétique dans l'arbre (10),
b) un nombre de bobines de mesure (24, 26, 28, 30) mesure un champ magnétique sortant de l'arbre (10),
c) une somme de toutes les tensions appliquées aux bobines de mesure (24, 26, 28, 30) est mesurée, et
d) le dispositif (14) est calibré pour détecter des couples et/ou des fréquences propres de torsion et/ou des oscillations de torsion par des mesures stationnaires en deux points de charge connus, et
e) des tensions de surface proportionnelles au couple sont mesurées dans une enveloppe d'arbre (12) de l'arbre (10).

**5.** Procédé selon la revendication 4, **caractérisé en ce que** le sens d'un couple détecté est déterminé selon le signe des différences de tension entre le nombre de bobines de mesure (24, 26, 28, 30).

**6.** Procédé selon la revendication 4, **caractérisé en ce que** la fréquence et l'intensité du champ magnétique induit par la bobine d'excitation (22) permettent un signal de mesure linéaire sur une plage de fréquences de 80 kHz à 120 kHz.

**7.** Procédé selon l'une quelconque des revendications 4 à 6, **caractérisé en ce qu'**un courant électrique compris entre 4 mA et 20 mA est produit comme signal de mesure.

**8.** Procédé selon l'une quelconque des revendications 4 à 7, **caractérisé en ce que** la bobine d'excitation (22) fonctionne à une tension d'alimentation de préférence de 24 volts.

FIG.1

FIG.2

FIG.3

# FIG.4

# FIG.5

# FIG.6

# FIG.7

# FIG.8

# FIG.9

# FIG.10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2202499 A2